**Europäisches Patentamt**

**European Patent Office**

**Office européen des brevets**

(19)

(11) Veröffentlichungsnummer : **0 115 033**
**B1**

(12)

# EUROPÄISCHE PATENTSCHRIFT

(45) Veröffentlichungstag der Patentschrift :
07.09.88

(21) Anmeldenummer : **83112869.9**

(22) Anmeldetag : **21.12.83**

(51) Int. Cl.⁴ : **B 32 B 27/36, B 32 B 7/02**

(54) **Polyestermehrschichtfolie mit thermoplastisch prägbarer Innenschicht.**

(30) Priorität : 30.12.82 DE 3248670

(43) Veröffentlichungstag der Anmeldung :
08.08.84 Patentblatt 84/32

(45) Bekanntmachung des Hinweises auf die Patenterteilung : 07.09.88 Patentblatt 88/36

(84) Benannte Vertragsstaaten :
DE FR GB LU NL

(56) Entgegenhaltungen :
BE-A- 683 947
US-A- 4 263 364

(73) Patentinhaber : **HOECHST AKTIENGESELLSCHAFT**
**Postfach 80 03 20**
**D-6230 Frankfurt am Main 80 (DE)**

(72) Erfinder : **Monzer, Helmut**
**Rheingaustrasse 176**
**D-6200 Wiesbaden (DE)**

## Beschreibung

Die vorliegende Erfindung betrifft eine prägbare, gestreckte und thermofixierte Mehrschichtfolie aus Polyestern mit unterschiedlichen Schmelzpunkten, umfassend zwei außenliegende Polyesterschichten aus Polyethylenterephthalat, zwischen die eine niedriger schmelzende Polyesterschicht aus Copolyester mit Ethylenterephthalat und Ethylenisophthalateinheiten eingebettet ist.

Außerdem betrifft die Erfindung auch ein Verfahren zur Herstellung der Mehrschichtfolie sowie einer Prägung darauf.

Aus der DE-AS 24 02 120 ist ein integraler wärmegehärteter, biaxial orientierter Kompositfilm aus einer transparenten Polyethylenterephthalatschicht mit einer glatten frei liegenden Hauptoberfläche und einer darauf angeordneten transparenten Copolyesterschicht bekannt, wobei die Copolyesterschicht eine frei liegende matte Hauptoberfläche aufweist. Der dort geschilderte Anmeldungsgegenstand ist hauptsächlich zur Verwendung als Unterlagenschicht für druckempfindliche Klebestreifen vorgesehen. Die Filme weisen eine zum Zeichnen und Schreiben geeignete Oberfläche auf, die von der matten Copolyesteroberfläche herrührt.

Aus der BE-A-638 947 ist eine Folie mit einem Schichtaufbau der eingangs genannten Art bekannt. Diese Folie wird zur Herstellung von hochlängsfesten Bändern eingesetzt und ist nur in Längsrichtung orientiert. Eine Verwendung dieser Folie als Prägefolie ist unter wirtschaftlichen Bedingungen nicht möglich.

Aufgabe der vorliegenden Erfindung ist es, eine Prägefolie zu schaffen, die bei höheren Temperaturen prägbar ist, damit die Prägetiefe, auch unter der anwendungstechnisch notwendigen Belastung bei höheren Temperaturen, erhalten bleibt, und die bei den hohen Prägetemperaturen nicht zum Verkleben an den entsprechenden Behandlungswerkzeugen neigt.

Gelöst wird diese Aufgabe durch eine Mehrschichtfolie der eingangs genannten Gattung, deren kennzeichnende Merkmale darin zu sehen sind, daß die Folie biaxial gestreckt ist, daß die Zwischenschicht aus einem Copolyester besteht, der zwischen 5 und 95 Gew.-% Ethylenisophthalateinheiten enthält, und daß die außenliegende Polyesterschicht, von der die Prägung ausgehend vorgenommen wird, in ihrer Stärke dünner ist als die zweite außenliegende Polyesterschicht.

Es hat sich bei der Erfindung gezeigt, daß durch Abdeckung der den niedrigeren Schmelzpunkt aufweisenden Mittelschicht durch die höher schmelzenden Polyesterschichten die Verprägbarkeit sehr gut ist, daß keine Klebeneigung zum Werkzeug während des Prägevorganges entsteht und daß höhere Temperaturen beim Prägevorgang angewandt werden können, so daß die Prägetiefe auch bei Belastung bei höheren Temperaturen erhalten bleibt.

In bevorzugter Weise werden für die Außenschichten Polyethylenterephthalat mit einer Schmelztemperatur zwischen 240 und 260 °C und für die Zwischenschicht ein Copolyester mit einer Schmelztemperatur zwischen 190 und 230 °C eingesetzt.

Die erfindungsgemäße Mehrschichtfolie besitzt einen asymmetrischen Aufbau ; die außenliegende Polyesterschicht, von der die Prägung ausgehend vorgenommen wird, ist erfindungsgemäß in ihrer Stärke dünner als die zweite außenliegende Polyesterschicht, welche der Seite, von der die Prägung vorgenommen wird, gegenüber angeordnet ist. Die Dicke der Mehrschichtfolie beträgt vorzugsweise 5 bis 350 μm, besonders bevorzugt 10 bis 200 μm. Dabei weist die außenliegende Polyesterschicht, von der die Prägung ausgehend vorgenommen wird, eine Dicke von wenigstens 0,01 μm auf, bevorzugt von 0,1 bis 10 μm, ganz besonders bevorzugt von 0,1 bis 5 μm. Die Dicke der Zwischenschicht beträgt wenigstens 0,5 μm, bevorzugt liegt sie zwischen 1 und 100 μm, besonders bevorzugt zwischen 2 und 40 μm. Die zweite außenliegende Polyesterschicht, welche der Seite, von der die Prägung vorgenommen wird, gegenüber angeordnet ist, weist eine Dicke von wenigstens 1 μm auf, bevorzugt von 1 bis 100 μm, besonders bevorzugt von 5 bis 50 μm.

Bevorzugt ist außerdem, daß die als Zwischenschicht eingesetzten Copolyester zwischen 5 und 50 Gew.-%, Ethylenisophthalateinheiten enthalten.

Die Polyesterzwischen- und -außenschichten werden nach den üblichen, allgemein bekannten Verfahren coextrudiert, biaxial gestreckt und thermofixiert.

Die Erfindung betrifft ferner ein Verfahren zur Herstellung einer geprägten Folie, bei dem eine Folie wie oben beschrieben verwendet wird, dadurch gekennzeichnet, daß man die Folie unter ausreichendem Druck in Kontakt mit einer strukturierten Fläche, bevorzugt einer Walze bringt, deren Struktur sich dann auf die Dreischichtfolie überträgt.

Die vorliegende Erfindung wird durch die anschließenden Beispiele dargestellt, ohne daß eine Einschränkung hierauf bestehen soll.

## Beispiel 1

Ein granuliertes Polyethylenterephthalat mit einer Intrinsic-Viskosität von 0,63 cm³/g wurde in einen herkömmlichen Coextruder eingeführt und zusammen mit einem granulierten Copolyester mit einer Intrinsic-Viskosität von 0,62 cm³/g, bestehend aus 18 Gew.-% Ethylenisophthalat und 82 Gew.-% Ethylenterephthalat, coextrudiert, wobei der Copolyester die Zwischenschicht zwischen den beiden außenliegenden, unterschiedliche Stärken aufweisenden, Polyethylenterephthalatschichten bildete. Die Schmelzeströme wurden über einen Adapter einer Einschichtdüse zugeführt.

Der Schmelzefilm von 350 μm wurde einer auf 20 °C gekühlten Walze zugeführt und dort abgekühlt.

Danach wurde die Folie einem Längsstreckwerk zugeführt, wobei nach Aufheizung der Vorfolie auf 80 °C eine Längsstreckung der Folie um 300 % durch die unterschiedlichen Umfangsgeschwindigkeiten der angetriebenen Walzen erfolgte.

Die einachsig längsgestreckte Folie wurde anschließend bei 100 °C um das 3,3-fache quergestreckt und unter Spannung bei 220 °C thermofixiert.

Die Folie hatte nach der Streckung eine Gesamtdicke von 35 μm, wobei die Innenschicht des Copolyesters 30 μm betrug.

Die Folie wurde mittels einer hydraulischen Presse mit einem Prägewerkzeug unter einem Druck von 5 N/mm² bei unterschiedlichen Temperaturen geprägt und die Prägetiefe und die Klebeneigung am Prägewerkzeug im Hinblick auf das Verhalten der Folien des Standes der Technik (DE-AS 24 02 120) verglichen.

Die so behandelten geprägten Folien wurden bei unterschiedlichen Temperaturen im Trockenschrank 60 s lang behandelt und die Prägetiefe vor und nach der Thermobehandlung mittels eines Oberflächenmeßgerätes (Perth-O-Meter) gemessen.

## Beispiel 2

Es wurde nach der gleichen Technologie wie in Beispiel 1 gearbeitet, nur mit dem Unterschied, daß der Folienaufbau aus Außenschichten von 0,4 und 19,6 μm Polyethylenterephthalat und einer Zwischenschicht von 15 μm Copolyester bestand.

## Vergleichsbeispiel A

Es wurde gemäß Beispiel 1 gearbeitet mit dem Unterschied, daß nur eine Zweischichtfolie (35 μm) entsprechend dem Stand der Technik hergestellt wurde (DE-AS 24 02 120), wobei die Copolyesterschicht 25 μm betrug.

## Vergleichsbeispiel B

Es wurde gemäß Beispiel 1 gearbeitet mit dem Unterschied, daß nur eine Zweischichtfolie (35 μm) aus dem gleichen Polyethylenterephthalat hergestellt wurde.

Wie aus den folgenden Tabellen erkennbar ist, ist die verminderte Haftung am Prägewerkzeug bei erhöhten Temperaturen und/oder die Prägetiefe und/oder die Prägetiefe nach anwendungstechnisch notwendiger thermischer Behandlung wesentlich besser als es die Folien des Standes der Technik bisher ermöglichten.

In den Tabellen haben die Symbole für die Haftung am Prägewerkzeug folgende Bedeutung :

+ Haftung
++ starke Haftung
+++ sehr starke Haftung ; die Folie wird beim Abziehen zerstört.

Bei Vergleichsbeispiel B ist nur eine sehr geringe Prägetiefe zu erzielen, die nach der thermischen Behandlung völlig verschwunden ist.

Die erfindungsgemäßen Folien eignen sich nach an sich bekannten Techniken zur Übertragung der Prägestruktur auf andere Oberflächen, zum direkten Einsatz als matte Dekorfolien oder als Zeichenfolien. Außerdem werden durch die Verprägung die Laufeigenschaften auf Herstellungs- bzw. Verarbeitungsmaschinen gegenüber glatten Folien verbessert.

Tabelle 1

Folie nach Beispiel 1

| Präge-temp. (°C) | Haftung auf dem Prägewerkzeug | Prägetiefe vor der thermischen Behandlung (/um) | Prägetiefe nach der thermischen Behandl. (/um) Zeit der Behandlung: 60 s | | | | |
|---|---|---|---|---|---|---|---|
| | | | 120°C | 140°C | 160°C | 180°C | 200°C |
| 100 | − | 20 | 14 | 12 | 10 | 8 | 8 |
| 110 | − | 20 | 17 | 17 | 15 | 10 | 10 |
| 120 | − | 26 | 22 | 22 | 20 | 18 | 16 |
| 130 | − | 26 | 23 | 25 | 25 | 20 | 19 |
| 140 | − | 26 | 25 | 25 | 25 | 22 | 21 |
| 150 | − | 26 | 25 | 25 | 25 | 24 | 23 |
| 160 | − | 26 | 25 | 25· | 25 | 25 | 25 |
| 170 | − | 26 | 26 | 26 | 26 | 26 | 26 |
| 180 | − | 26 | 26 | 26 | 26 | 26 | 26 |
| 190 | − | 26 | 26 | 26 | 26 | 26 | 26 |
| 200 | − | 26 | 26 | 26 | 26 | 26 | 26 |
| 210 | + | 26 | 26 | 26 | 26 | 26 | 26 |
| 220 | +++ | | | | | | |

## Tabelle 2

**Folie nach Beispiel 2**

| Präge-temp. (°C) | Haftung auf dem Prägewerk-zeug | Prägetiefe vor der thermischen Behandlung (/um) | Prägetiefe nach der thermischen Behandl. (/um) Zeit der Behandlung: 60 s | | | |
|---|---|---|---|---|---|---|
| | | | 120°C | 140°C | 160°C | 180°C |
| 100 | − | 10 | 7 | 4 | 2 | 2 |
| 110 | − | 10 | 8 | 5 | 3 | 3 |
| 120 | − | 12 | 13 | 8 | 5 | 5 |
| 130 | − | 15 | 14 | 10 | 8 | 6 |
| 140 | − | 15 | 15 | 15 | 15 | 15 |
| 150 | − | 15 | 15 | 15 | 15 | 15 |
| 160 | − | 15 | 15 | 15 | 15 | 15 |
| 170 | − | 15 | 15 | 15 | 15 | 15 |
| 180 | − | 15 | 15 | 15 | 15 | 15 |
| 190 | − | 15 | 15 | 15 | 15 | 15 |
| 200 | − | 15 | 15 | 15 | 15 | 15 |
| 210 | + | 15 | 15 | 15 | 15 | 15 |
| 220 | +++ | | | | | |

0 115 033

## Tabelle 3

Folie nach Vergleichsbeispiel A

| Präge-temp. (°C) | Haftung auf dem Prägewerkzeug | Prägetiefe vor der thermischen Behandlung (/um) | Prägetiefe nach der thermischen Behandl. (/um) Zeit der Behandlung: 60 s | | | | |
|---|---|---|---|---|---|---|---|
| | | | 120°C | 140°C | 160°C | 180°C | 200°C |
| 100 | + | 16 | 14 | 12 | 12 | 11 | 10 |
| 110 | + | 18 | 17 | 17 | 14 | 13 | 4 |
| 120 | ++ | 25 | 24 | 18 | 18 | 16 | 13 |
| 130 | ++ | 25 | 24 | 18 | 18 | 16 | 14 |
| 140 | +++ | | | | | | |
| 150 | +++ | | | | | | |
| 160 | +++ | | | | | | |
| 170 | | | | | | | |
| 180 | | | | | | | |
| 190 | | | | | | | |
| 200 | | | | | | | |
| 210 | | | | | | | |
| 220 | | | | | | | |

0 115 033

Tabelle 4

Folie nach Vergleichsbeispiel B

| Präge-temp. (°C) | Haftung auf dem Prägewerk-zeug | Prägetiefe vor der thermischen Behandlung (/um) | Prägetiefe nach der thermischen Behandl. (/um) Zeit der Behandlung: 60 s | | | | |
|---|---|---|---|---|---|---|---|
| | | | 120°C | 140°C | 160°C | 180°C | 200°C |
| 100 | — | 2 | — | — | — | — | — |
| 110 | — | 2 | — | — | — | — | — |
| 120 | — | 2 | — | — | — | — | — |
| 130 | — | 2 | — | — | — | — | — |
| 140 | — | 2 | — | — | — | — | — |
| 150 | — | 2 | — | — | — | — | — |
| 160 | — | 2 | — | — | — | — | — |
| 170 | — | 2 | — | — | — | — | — |
| 180 | — | 2 | — | — | — | — | — |
| 190 | — | 2 | — | — | — | — | — |
| 200 | — | 2 | — | — | — | — | — |
| 210 | + | 2 | — | — | — | — | — |
| 220 | +++ | | | | | | |

0 115 033

# 0 115 033

## Patentansprüche

1. Prägbare, gestreckte und thermofixierte Mehrschichtfolie aus Polyestern mit unterschiedlichen Schmelzpunkten, umfassend zwei außenliegende Polyesterschichten aus Polyethylenterephthalat, zwischen die eine niedriger schmelzende Polyesterschicht aus Copolyester mit Ethylenterephthalat- und Ethylenisophthalateinheiten eingebettet ist, dadurch gekennzeichnet, daß die Folie biaxial gestreckt ist, daß die Zwischenschicht aus einem Copolyester besteht, der zwischen 5 und 95 Gew.-% Ethylenisophthalateinheiten enthält, und daß die außenliegende Polyesterschicht, von der die Prägung ausgehend vorgenommen wird, in ihrer Stärke dünner ist als die zweite außenliegende Polyesterschicht.

2. Folie nach Anspruch 1, dadurch gekennzeichnet, daß die Gesamtfolienstärke 5 bis 350 µm beträgt, wobei die Stärke der Zwischenschicht wenigstens 0,5 µm beträgt.

3. Verfahren zur Herstellung der Folie nach Anspruch 1 oder 2, dadurch gekennzeichnet, daß die Polyesterzwischen- und -außenschichten coextrudiert, biaxial gestreckt und thermofixiert werden.

4. Verfahren zur Herstellung einer geprägten Folie, bei dem eine Folie nach einem der Ansprüche 1 oder 2 verwendet wird, dadurch gekennzeichnet, daß man die Folie unter ausreichendem Druck in Kontakt mit einer strukturierten Fläche, bevorzugt einer Walze bringt, deren Struktur sich dann auf die Dreischichtfolie überträgt.

## Claims

1. Embossable, stretched and heat-set multilayer film formed of polyesters having different melting points, comprising two external polyester layers of polyethylene terephthalate and a lower-melting polyester layer of a copolyester containing ethylene terephthalate and ethylene isophthalate units sandwiched between the external layers, wherein the film is biaxially stretched, the intermediate layer comprises a copolyester containing between 5 and 95 % by weight of ethylene isophthalate units and the external polyester layer on which embossing is effected is thinner than the second external polyester layer.

2. A film as claimed in claim 1, wherein the total film thickness is in the range from 5 to 350 µm, with the thickness of the intermediate layer being at least 0.5 µm.

3. Process for the production of the film as claimed in claim 1 or 2, wherein the intermediate and external polyester layers are coextruded, biaxially stretched and heat-set.

4. A process for the production of an embossed film, using a film as claimed in any of claims 1 or 2, wherein the film is, under sufficient pressure, contacted with a textured surface, preferably a roll, the texture of which is then transferred to the three-layer film.

## Revendications

1. Feuille multicouche apte au gaufrage, étirée et thermodurcie, à base de polyesters à points de fusion différents, comprenant deux couches externes de polyester à base de polytéréphtalate d'éthylène, entre lesquelles est incluse une couche de polyester, à point de fusion plus bas, à base d'un copolyester comportant des motifs téréphtalate d'éthylène et isophtalate d'éthylène, caractérisée en ce que la feuille est étirée biaxialement, en ce que la couche intermédiaire est constituée d'un copolyester qui contient entre 5 et 95 % en poids de motifs isophtalate d'éthylène, et en ce que la couche externe de polyester, à partir de laquelle est effectué le gaufrage, est d'une épaisseur plus faible que la seconde couche externe de polyester.

2. Feuille selon la revendication 1, caractérisée en ce que l'épaisseur totale de la feuille est de 5 à 350 µm, l'épaisseur de la couche intermédiaire étant au moins 0,5 µm.

3. Procédé pour la fabrication de la feuille selon la revendication 1 ou 2, caractérisé en ce que les couches de polyester externe et intermédiaire sont coextrudées, étirées biaxialement et thermodurcies.

4. Procédé pour la fabrication d'une feuille gaufrée, dans lequel on utilise une feuille selon l'une des revendications 1 ou 2, caractérisé en ce que l'on met la feuille, sous une pression suffisante, en contact avec une surface structurée, de préférence d'un rouleau, dont la structure est ensuite transférée sur la feuille à trois couches.